# EUROPÄISCHE PATENTSCHRIFT

(11) **EP 0 715 877 B1**
(45) Veröffentlichungstag und Bekanntmachung des Hinweises auf die Patenterteilung: **22.09.1999**
(21) Anmeldenummer: 95112232.4
(22) Anmeldetag: 03.08.1995
(51) Int. Cl.: B01D 46/24

(54) **Flansch, für eine Vorrichtung zum Abscheiden von Ölaerosol aus Luft**
Flange for device to remove oil aerosols from air
Bride pour appareil de séparation des aérosols d'huile contenus dans l'air

(30) Priorität: 06.12.1994 DE 9419512 U
(43) Veröffentlichungstag der Anmeldung: 12.06.1996
(73) Patentinhaber: FILTERWERK MANN & HUMMEL GMBH, 71631 Ludwigsburg (DE)
(72) Erfinder: Binder, Walter, D-71522 Backnang (DE); Keller, Lothar, D-70176 Stuttgart (DE); Wolf, Michael, D-71126 Gäufelden (DE)
(74) Vertreter: Voth, Gerhard, Dipl.-Ing.

(56) Entgegenhaltungen:
- EP-A- 0 505 693
- DE-C- 4 405 494
- FR-A- 1 385 428
- FR-A- 2 251 347
- FR-A- 2 393 597
- GB-A- 2 172 359

## Beschreibung

Die Erfindung betrifft eine Vorrichtung zum Abscheiden von Aerosol aus Luft.

Aus der DE-A-33 11 682 ist eine Lufttrocknungseinrichtung für von einem Kompressor aufladbare Druckluftanlage, insbesondere Druckluftbremsanlagen von Fahrzeugen, bekannt. Diese arbeitet mit einem Trocknungsmittel, das ein begrenztes Aufnahmevermögen hat und Je nach Flüssigkeitsanfall in der zu trocknenden Luft entsprechend häufig gewechselt werden muß.

Es ist weiterhin aus dem DE-U-85 01 736 ein Luftentölelement bekannt. Dieses ist nach Art eines Wechselfilters aufgebaut. Dies bedeutet, daß der Coalescer in einem Wechselelement angeordnet ist. Dieses Wechselelement kann an einen Abscheiderkopf mit einem zentralen Befestigungsgewinde befestigt werden. Ein Nachteil dieses bekannten Ölabscheiders ist darin zu sehen, daß bei einem Austausch des Coalescers das komplette Wechselelement entfernt und durch ein neues ersetzt werden muß. Dies hat zur Folge, daß eine große Menge an Müll bzw. Sondermüll zu entsorgen ist.

Der Erfindung liegt deshalb die Aufgabe zugrunde, eine Vorrichtung zum Abscheiden von Ölaerosol aus Luft zu schaffen, bei der nur eine geringe Menge an zu entsorgenden Stoffen anfällt. Diese Aufgabe wird dadurch gelöst, daß bei der Vorrichtung von Ölaerosol aus Luft ein Flansch vorgesehen ist, welcher aus einem kautschukbeschichteten Metallblech besteht.

Kautschukbeschichtetes Metallblech ist beispielsweise aus der Firmenschrift der Fa. EAGLE PICHER Industries GmbH bekannt. Dort sind Flachdichtungen aus kautschukbeschichteten Blechen und anderen Dichtmaterialien beschrieben sowie Geräuschisolierbleche für Fahrzeugbremensen u.a.

Die Erfindung macht sich die Vorteile dieser kautschukbeschichteten Bleche zunutze und verwendet diese als Flansch, der einerseits eine Dichtwirkung aufweist und andererseits mit entsprechenden Befestigungsvorrichtungen bestückt werden kann.

Gemäß einer Ausgestaltung der Erfindung ist vorgesehen, Metallblech zu verwenden, das auf beiden Seiten mit Kautschuk beschichtet ist. Dadurch kann beiderseits des Flanschs eine Abdichtwirkung erzielt werden. Der Flansch ist bevorzugt an einem ringförmigen Coalescer angeordnet. Ein solches Coalescerelement ist einerseits zwischen dem umgebenden Gehäuse und gegenüber einem Grundelement angeordnet.

Die Erfindung wird nachfolgend anhand eines Ausführungsbeispiels näher dargestellt. Es zeigt:
Figur 1 die Anwendung eines Flansches bei der Parallelschaltung zweier Luftentölelemente.
Figur 2 eine Detaildarstellung des Flansches.

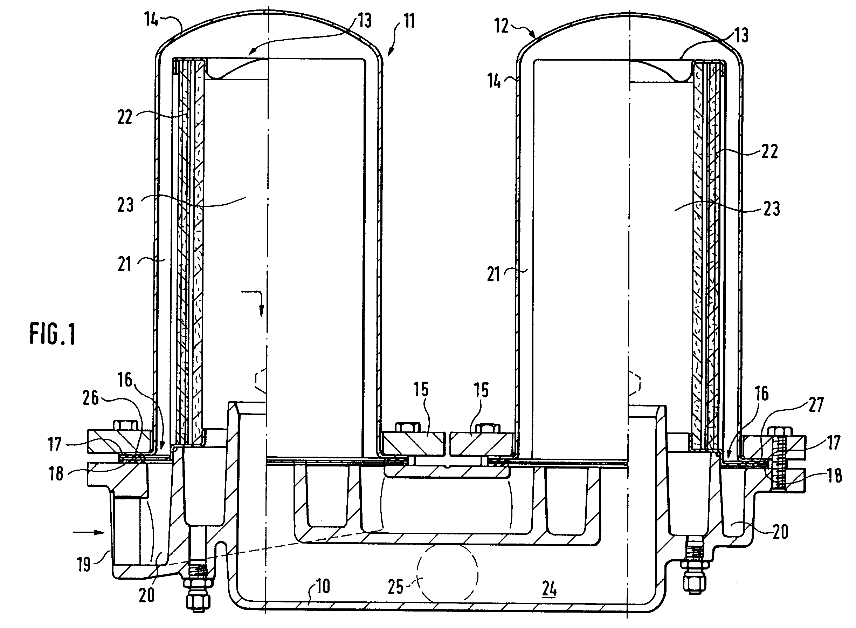

Die Figur 1 zeigt zwei Luftentölelemente 11, 12, welche an einem Flanschteil 10 befestigt sind. Die Luftentölelemente bestehen jeweils aus einem Ölabscheider 13, jeweils einem Gehäuse 14 und Flanschringen 15. Gehäuse 14 und Ölabscheider 13 bilden jeweils eine auf dem Flanschteil 10 angeordnete lösbare Einheit. Zum Austausch des Ölabscheiders wird der entsprechende Flanschring gelöst und das Gehäuse entfernt.

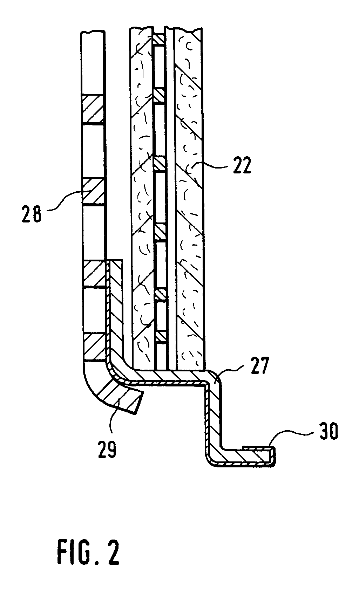

In Figur 2 ist eine Detaildarstellung des Flansches dargestellt. Der Flansch 27 liegt in dieser Version innerhalb des Innenrohres 28. Dieses Innenrohr 28 ist am unteren Bereich 29 leicht umgebördelt. Das Coalescerelement 22 ist, wie in der Figur 1 dargestellt, innerhalb des Flanschs angeordnet. Zur elektrischen Verbindung zwischen dem Innenrohr 28 und dem Gehäuse 14 ist an dem Flansch 27 eine Kupferfolie 30 aufgeklebt. Diese Kupferfolie verbindet somit elektisch leitend das Innenrohr 28 mit dem Gehäuse 10 und verhindert wirksam eine statisch elektrische Aufladung des Coalescerelements.

Die zu entölende Luft strömt über die Einströmöffnung 19 und Verteilkanäle 20 in den Außenraum 21 der beiden Ölabscheider 13. Anschließend strömt diese Luft durch das Coalescerelement 22 des jeweiligen Ölabscheiders 13 und verläßt über den Innenraum 23 den jeweiligen Ölabscheider 13. Die entölte Luft gelangt über den Abströmkanal 24 und die Abströmöffnung 25 des Flanschteils 10 zu dem hier nicht dargestellten Verbraucher.

Bei dieser hier dargestellten Einrichtung besteht die Möglichkeit, beide Ölabscheider parallel zu betreiben. Es besteht aber auch die Möglichkeit, über ein geeignetes Umschaltventil, welches im Flanschteil 10 anordenbar ist, nur einen der beiden Ölabscheider oder wecheselweise jeweils einen zu betreiben. Damit kann diese Einrichtung an unterschiedliche Betriebsbedingungen angepaßt werden. Die Abdichtung zwischen den Flanschringen 15 und dem Flanschteil 10 erfolgt über einen doppelseitig mit Kautschuk beschichtetem Flansch 26, 27. Das Ölabscheiderelement 13 ist an diesem Flansch mit seiner Klebeverbindung oder ähnliches befestigt. Durch die beidseitige Beschichtung des Flanschs wird eine zuverlässige Abdichtung einerseits zwischen dem Flanschteil 10 und dem Gehäuse 14, andererseits zwischen der Einströmöffnung 19 und der Abströmöffnung 25 erzielt.

## Patentansprüche

1. Vorrichtung zum Abscheiden Von Ölaerosol aus Luft, bestehend aus einem Abscheideelement in Form eines ringförmigen Coalescers (22), welches einen Flansch (27) aufweist, wobei dieser aus einem kautschukbeschichtetem Metallblech besteht und somit der Flansch (27) die Abdichtung zwischen einem den Coalescer (22) umgebenden Gehäuse (14) und einem das Abscheideelement tragenden, vom Gehäuse (14) ablösbaren Grundelement (10) bewirkt.

2. Vorrichtung nach Anspruch 1, dadurch gekennzeichnet, daß das Metallblech auf beiden Seiten mittels Kautschuk beschichtet ist.

3. Vorrichtung nach einem der vorherigen Ansprüche, wobei das Grundelement ein Adapterelement ist, an welches Anschlußleitungen (19, 20, 24, 25) für die Zuführung und Abführung der Luft und/oder weitere Flanschteile angeordnet sind.

## Claims

1. Apparatus for separating oil aerosol from air, comprising a separating member in the form of an annular coalescer, which includes a flange (27), said flange being formed from a rubber-coated metal sheet and, in consequence, the flange (27) effecting the seal between a housing (14), which surrounds the coalescer (22), and a base member (10), which is provided with the separating member and is detachable from the housing (14).

2. Apparatus according to claim 1, characterised in that the metal sheet is coated with rubber on both sides.

3. Apparatus according to one of the previous claims, wherein the base member is an adapter member, on which there are disposed connecting lines (19,20,24,25) for the supply and discharge of the air and/or additional flange members.

## Revendications

1. Dispositif pour séparer des aérosols d'huile de l'air, comprenant un élément séparateur sous la forme d'un coalesceur (22) annulaire,
caractérisé en ce que
ce coalesceur présente une bride (27) faite d'une tôle métallique enduite de caoutchouc, cette bride assurant l'étanchéité entre un boîtier (14) entourant le coalesceur (22) et une embase (10) qui porte l'élément séparateur et peut être séparée du boîtier (14).

2. Dispositif selon la revendication 1,
caractérisé en ce que
la tôle métallique est enduite de caoutchouc sur ses deux faces.

3. Dispositif selon une des revendications précédentes,
caractérisé en ce que
l'embase est un élément adaptateur sur lequel sont montés des conduites de raccordement (19, 20, 24, 25) servant d'entrée et de sortie de l'air, et/ou d'autres parties de bride.
